# EUROPEAN PATENT SPECIFICATION

(11) **EP 1 595 383 B1**
(45) Date of publication and mention of the grant of the patent: **19.12.2018**
(21) Application number: 04710700.8
(22) Date of filing: 12.02.2004
(51) Int. Cl.: H04L 29/06

(54) **METHODS AND APPARATUS FOR INTEGRATING ONE-WAY AND TWO-WAY SECURITY SYSTEMS TO ENABLE SECURE DISTRIBUTION OF ENCRYPTED SERVICES**
VORRICHTUNG UND VERFAHREN ZUR INTEGRATION EIN- UND ZWEIWEGSSICHERHEITSSYSTEMEN ZUM ERMÖGLICHEN SICHERER VERTEILUNG VERSCHLÜSSELTER DIENSTEN
PROCEDES ET APPAREIL POUR L'INTEGRATION DE SYSTEMES DE SECURITE UNIDIRECTIONNEL ET BIDIRECTIONNEL POUR ASSURER LA DISTRIBUTION SECURISEE DE SERVICES CHIFFRES

(30) Priority: 19.02.2003 US 368845
(43) Date of publication of application: 16.11.2005
(73) Proprietor: GENERAL INSTRUMENT CORPORATION, Horsham, Pennsylvania 19044 (US)
(72) Inventor: BOOTH, Robert, C., Jamison, PA 18929 (US)
(74) Representative: Boult Wade Tennant LLP
(86) International application number: PCT/US2004/004308
(87) International publication number: WO 2004/075530

(56) References cited:
- EP-A- 1 304 844
- WO-A-01/52473
- WO-A-97/41661
- GARFINKEL & SPAFFORD: "web security, privacy and commerce" 2002, O'REILLY , SEBASTOPOL,US , XP002291393 page 8 page 85 page 107 - page 108

## Description

### BACKGROUND OF THE INVENTION

The present invention relates to the fields of digital and streaming media communications, in-home networking, and digital communication security. More specifically, the present invention relates to the integration of one-way and two-way security systems to enable the secure distribution of encrypted services.

Television system operators, including cable and satellite television system operators, as well as off-air service providers, offer a large number of audio, video, and audiovisual services to their customers. Such services include standard television programming, pay-per-view television programming, on-demand programming, streaming media services, Internet services, and the like. However, the consumers receiving such services are typically limited to viewing the services on a particular television set associated with a television terminal (e.g., set-top box) provided by the television system operator.

Currently there is no mechanism to securely distribute encrypted audio and/or video content from a digital television terminal (such as a digital set-top box) to a remote television set or other consumer device in a manner that protects the interests of the content provider and the television system operator.

It would be advantageous to establish a secure environment for distributing audio and/or video content beyond the television terminal. It would be further advantageous if such distribution could be accomplished using an in-home network, by integrating a one-way security system provided, for example, in the television terminal, with a two-way security system provide, for example, in a web pad. Enabling such distribution would make television system operators more receptive to purchasing new products, such as web pads and the like. Further, television system operators would be able to assess additional service charges for such capability, as consumers would be able use their personal computers (or a web pad, or the like) to access services from their television terminals via the in-home network. Such a feature would drive the sales of television terminals that are so enabled.

WO 97/41661 describes an encryption server that receives a first encrypted message and decrypts the encrypted message using a first key to yield a second encrypted message. The second encrypted message is then reencrypted for transmission to a recipient.

WO 01/52473 describes a system for securely managing electronic documents in a networked environment.

The methods and apparatus of the present invention provide the foregoing and other advantages.

### SUMMARY OF THE INVENTION

In accordance with an aspect of the present invention there is provided an apparatus, a method, and a decryption device according to the accompanying claims.

The present invention relates to methods and apparatus for integrating one-way and two-way security systems to enable secure distribution of services. A decryption device is provided which is enabled to securely receive and decrypt encrypted services from one or more service providers. A consumer device is provided which is enabled to securely communicate with the decryption device. A user interface associated with the consumer device is provided for initiating a service request for a requested service from the one or more service providers. In operation, the service request is communicated from the consumer device to the decryption device. The requested service is then acquired by the decryption device from the one or more service providers in response to the service request as an encrypted requested service. The acquired encrypted requested service is then decrypted by the decryption device. The requested service is re-encrypted and securely communicated from the decryption device to the consumer device. The re-encrypted requested service can then be decrypted and decoded at the consumer device to provide the requested service.

Those skilled in the art will appreciate that the present invention may be implemented using software, hardware, and/or firmware.

### BRIEF DESCRIPTION OF THE DRAWINGS

The present invention will hereinafter be described in conjunction with the appended drawing figures, wherein like numerals denote like elements, and:
Figure 1 shows a block diagram of an example embodiment of the present invention;
Figure 2 shows a block diagram of an example embodiment of a decryption device in accordance with the present invention; and
Figure 3 shows a block diagram of an example embodiment of a consumer device in accordance with the present invention.

### DETAILED DESCRIPTION OF THE INVENTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing a preferred embodiment of the invention.

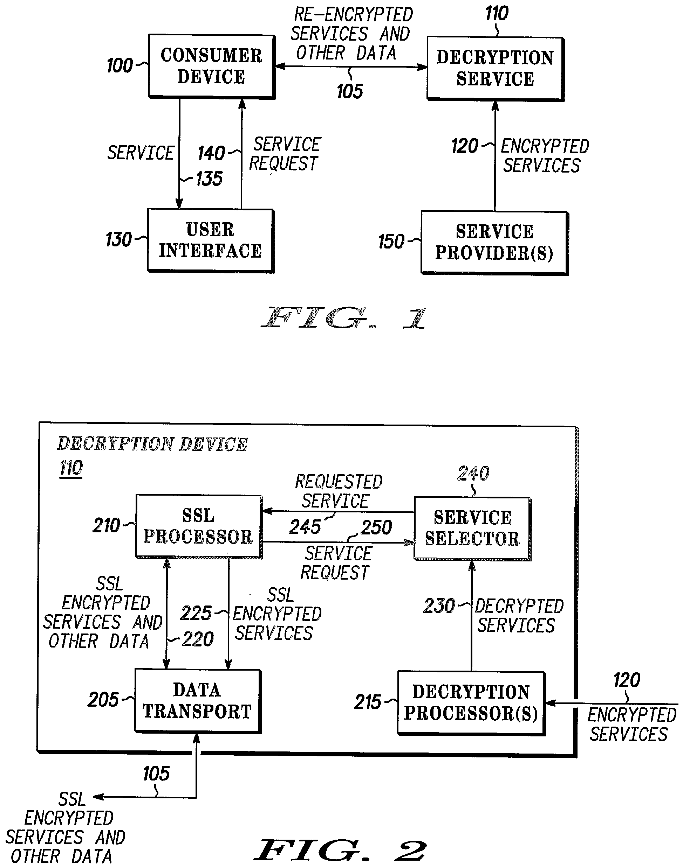

The present invention relates to methods and apparatus for integrating one-way and two-way security systems to enable secure distribution of services. As shown in Figure 1, a decryption device 110 is provided which is enabled to securely receive and decrypt encrypted services 120 from one or more service providers 150. A consumer device 100 is provided which is enabled to securely communicate with the decryption device 110. A user interface 130 associated with the consumer device 100 is provided for initiating a service request 140 for a requested service 135 from the one or more service providers. In operation, the service request 140 is communicated from the consumer device 100 to the decryption device 110. The requested service is then acquired by the decryption device 110 from the one or more service providers in response to the service request as an encrypted requested service 120. The acquired encrypted requested service 120 is then decrypted by the decryption device 110. The requested service is re-encrypted and securely communicated from the decryption device 110 to the consumer device 100 (e.g., as re-encrypted service 105). The re-encrypted requested service 105 can then be decrypted and decoded at the consumer device 100 to provide the requested service 135.

The service request 140 may be communicated from the consumer device 100 to the decryption device 110 via one of a secure channel or a non-secure channel.

The requested service 135 may be securely acquired by the decryption device 110 from the service provider 150. The requested service 135 may be received by the decryption device in an encrypted multiplex of services (e.g., encrypted services 120). If so, the decryption device 110 may be adapted to decrypt the multiplex of services 120 in order to acquire the requested service 135.

The received encrypted services 120 may be received in a first encryption format and the re-encrypted requested service 105 may be encrypted in a second encryption format compatible with the consumer device 100.

The received encrypted services 120 may be received in a first encryption format and the re-encrypted requested service 105 may be encrypted in a second encryption format compatible with the consumer device 100.

The consumer device 100 may establish a secure socket layer (SSL) connection with the decryption device 110. The SSL connection may be enabled via one of a Transmission Control Protocol/Internet Protocol (TCP/IP) transport scheme, an MPEG-2 transport scheme, or any other type of transport scheme, including a proprietary transport scheme. The service request 140 may be securely communicated from the consumer device 100 to the decryption device 110 via the SSL connection.

The requested service 135 may be a parentally controlled service. In such an embodiment, the decryption device 110 may communicate a response to the consumer device 100 requesting access information for the parental controlled service. The access information may be provided by a user via the user interface 130. The access information may be securely communicated from the consumer device 100 to the decryption device 110. In the event the access information is verified by the decryption device 110, the user is authorized to receive the requested service 135. The access information may comprise at least one of a personal identification number, a user name, a password, or similar access control information.

The requested service 135 may be a pay-per-view service. The decryption device 110 may communicate a response to the consumer device 100 requesting payment or authorization information for the pay-per-view service. The payment or authorization information may be provided by a user via the user interface 130. The payment or authorization information may be securely communicated from the consumer device 100 to the decryption device 110. In the event the payment or authorization information is verified by the decryption device 110, the user is authorized to receive the requested pay-per-view service.

A smart card interface may be provided to enable the payment or authorization for the requested pay-per-view service. The smart card interface may be integrated into or part of the user interface 130, the consumer device 100, or the decryption device 110.

The consumer device 100 may comprise an Internet appliance, a personal computer, a personal digital assistant, a cellular telephone, or the like. The decryption device 110 may comprise a digital television terminal, a digital television, or the like. The user interface 130 may comprise one of an interactive display device, a remote control device adapted for communication with the consumer device, a touch screen associated with the consumer device, a joystick associated with the consumer device, a mouse, a touch pad associated with the consumer device, or any other similar type of interface.

In an example embodiment of the invention as shown in Figure 2, the decryption device 110 may comprise a first secure socket layer (SSL) processor 210 for enabling SSL communications and re-encrypting the requested service. A service selector 240 for acquiring the requested service (as an encrypted requested service 120) from the one or more service providers, in response to the service request 250, may also be provided as part of the decryption device 110. A decryption processor 215 in the decryption device 110 may be provided for decrypting the encrypted services 120 received from the one or more service providers.

The service request may be received by the SSL processor 210 and forwarded from the SSL processor to the service selector 240. The service selector 240 may acquire the requested service from the one or more service providers as an encrypted requested service 120. The decryption processor 215 may then decrypt the encrypted requested service 120, providing decrypted requested service 230 to the service selector 240. The service selector 240 forwards the decrypted requested service to the SSL processor 210 as requested service 245. The SSL processor 210 re-encrypts the requested service 245 as an SSL encrypted service 225. The SSL encrypted service 225 is securely communicated from the decryption device 110 to the consumer device 100 (e.g., via data transport mechanism 205) as SSL encrypted service 105, where it can be decrypted.

The service selector 240 may acquire the requested service using standard service acquisition mechanisms. For example, a service identifier (e.g., a channel map number from a channel map) may be passed to the service selector 240 via a software API call (e.g., from processor 210). The service selector 240 then initiates a tuning operation to tune a tuner (not shown) to a specific frequency. In the case of digital services, the service selector 240 also handles signal (e.g., quadrature amplitude modulation (QAM)) lock, program table acquisition filtering, and ultimately service selection from the multiplex of services received.

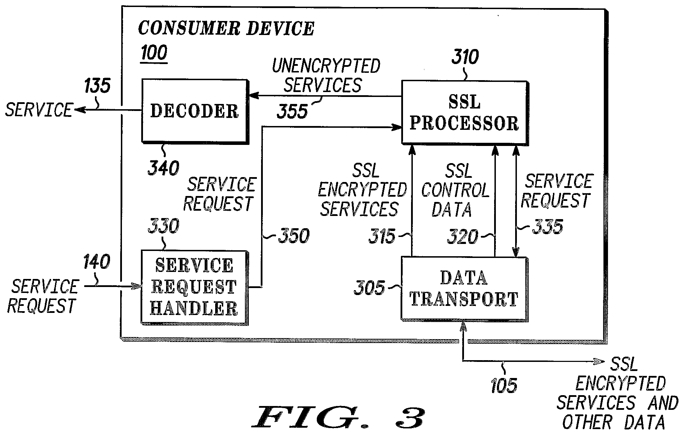

As shown in Figure 3, the consumer device 100 may comprise a second SSL processor 310 for decrypting the re-encrypted service 315 and a decoder 340 for decoding the decrypted (i.e., unencrypted) requested service 355. A service request handler 330 receives the service request 140 from the user interface 130. The service request 350 is forwarded from the service request handler 330 to the second SSL processor 310. The second SSL processor 310 forwards the service request 335 on to the decryption device 110 via the data transport mechanism 305. The service request may then be processed by the decryption device 110 as discussed above in connection with Figure 2. The SSL encrypted service 105 may be received by the consumer device 100 from the decryption device 110 at data transport mechanism 305, which forwards SSL control data 320 and SSL encrypted service 315 to SSL processor 310. The second SSL Processor 310 can then decrypt the SSL encrypted services 315 and forward the decrypted (unencrypted) service 355 to decoder 340 for decoding. The decoded service 135 can then be output for display.

In a further example embodiment, the decryption device 110 may be located at a television headend. In such an embodiment, the consumer device 100 may comprise a digital television terminal. The decryption device 110 may decrypt services received in a first encryption format and re-encrypt a requested service in a second encryption format for communication to the digital television terminal 100. The first encryption format may comprise secure socket layer (SSL) encryption. The second encryption format may comprise an encryption format compatible with a television system network distribution system.

The decryption device 110 may include multiple decryption processors 215 for decrypting multiple services received from multiple service providers 150. The decryption device 110 is enabled to process multiple service requests received simultaneously from multiple digital consumer devices 100.

The consumer device 100 may be one of a plurality of consumer devices in a television system network. The decryption device 110 may be a digital television terminal in a television system network. The consumer device 100 may be enabled to securely access the decryption device 110 from a remote location. For example, the consumer device 100 may securely access the decryption device 110 via a broadband connection from the remote location.

The encrypted services 120 may comprise one of pay-per-view services, television programs, Internet content, streaming media content, audio content, video content, audiovisual content, or the like.

The service providers 150 may comprise at least one of an Internet provider, a telephone provider, a cable television provider, a satellite television provider, an off-air television provider, a streaming media provider, or a radio station.

The decryption device 110 may be located within a local network. Multiple consumer devices 100 within the network may be enabled to securely communicate with the decryption device 110. The decryption device 110 may comprise a plurality of decryption processors 215 for decrypting multiple services in response to a multiple service requests. The decryption device 110 may comprise a digital television terminal. The multiple consumer devices 100 may each comprise one of a personal computer, an Internet appliance, a personal digital assistant, a cellular telephone, or the like. The decryption device 110 may comprise one of a secure broadband gateway (SBG) or a secure broadband modem (SBM).

The re-encrypted requested service may be decrypted and decoded at the decryption device 110 and then output from the decryption device 110, rather than or in addition to being passed on to the consumer device 100. For example, the decryption device 110 may be a television terminal and the consumer device 100 may comprise an Internet appliance. In addition to enabling secure communications of the service from the television terminal to the Internet appliance, the television terminal is enabled to decrypt the re-encrypted services and decode them for display on the television. Alternatively, a separate path may be provided which enables the television terminal to decrypt and decode the service as originally received for display on the television (i.e. without the need to re-encrypt and then decrypt again).

The present invention may be used, for example, to enable the secure distribution of video and/or audio services from consumers' homes to remote locations. As one example, a consumer may purchase a service from a television provider for a digital video recorder enabled television "set-top" terminal. The consumer, while traveling, could login to the terminal from a laptop using a broadband connection and securely stream content that has been recorded on the terminal to their remote laptop. Various other uses for the present invention will be apparent from those skilled in the art from the disclosure above.

It should now be appreciated that the present invention provides advantageous methods and apparatus for integrating one-way and two-way security systems, such as consumer devices and decryption devices, to enable increased distribution of services in a secure manner.

## Claims

1. Apparatus for integrating one-way and two-way security systems to enable secure distribution of services, comprising:
a decryption device (110) enabled to securely receive and decrypt encrypted services from one or more service providers (150);
a consumer device (100) enabled to securely communicate with said decryption device (110);
a user interface (130) associated with said consumer device (100) for initiating a service request for a requested service from said one or more service providers (150);
wherein:
said consumer device (100) is arranged to communicate said service request to said decryption device (110);
said decryption device (110) is arranged to acquire said requested service from said one or more service providers (150) in response to said service request as an encrypted requested service;
said decryption device (110) is arranged to decrypt the acquired encrypted requested service;
said decryption device (110) is arranged to re-encrypt said requested service and to securely communicate the re-encrypted requested service from said decryption device (110) to said consumer device (100); and
the consumer device (100) is arranged to decrypt and decode said re-encrypted requested service to provide said requested service.

2. Apparatus in accordance with claim 1, wherein said service request is communicated via one of a secure channel or a non-secure channel.

3. Apparatus in accordance with claim 1, wherein said requested service is securely acquired by said decryption device (110).

4. Apparatus in accordance with claim 1, wherein:
said requested service is received by said decryption device (110) in an encrypted multiplex of services; and
said decryption device (110) decrypts said multiplex in order to acquire said requested service.

5. Apparatus in accordance with claim 1, wherein:
said received encrypted services are received in a first encryption format; and
said re-encrypted requested service is encrypted in a second encryption format compatible with said consumer device (100).

6. Apparatus in accordance with claim 1, wherein said consumer device (100) establishes a secure socket layer (SSL) connection with said decryption device (110).

7. Apparatus in accordance with claim 1, wherein said decryption device (110) comprises:
a first secure socket layer (SSL) processor (210) for enabling SSL communications and re-encrypting said requested service;
a service selector (240) for acquiring the requested service from said one or more service providers (150) in response to said service request as an encrypted requested service; and
a decryption processor (215) for decrypting said encrypted services received from said
one or more service providers (150).

8. Apparatus in accordance with claim 1, wherein:
said decryption device (110) is located within a local network; and
multiple consumer devices within said network are enabled to securely communicate with said decryption device (110).

9. Apparatus in accordance with claim 1, wherein:
said decryption device (110) is arranged to decrypt and decode said re-encrypted requested service and
said requested service is output from said decryption device (110).

10. A method for integrating one-way and two-way security systems to enable secure distribution of services, comprising:
initiating a service request for a requested service on a consumer device (100) via a user interface;
communicating said service request from said consumer device to a decryption device (110);
enabling said requested service to be acquired by said decryption device (110) as an encrypted requested service in response to said service request;
decrypting the acquired encrypted requested service at said decryption device (110);
re-encrypting said requested service at said decryption device (110);
securely communicating said requested service from said decryption device (110) to said consumer device (100); and
decrypting and decoding said re-encrypted requested service at said consumer device (100) to provide said requested service.

11. A method in accordance with claim 10, wherein said service request is communicated via one of a secure channel or a non-secure channel.

12. A method in accordance with claim 10, wherein said requested service is securely acquired by said decryption device (110).

13. A method in accordance with claim 10, wherein:
said requested service is received by said decryption device (110) in an encrypted multiplex of services; and
said decryption device (110) decrypts said multiplex in order to acquire said requested service.

14. A method in accordance with claim 10, wherein:
said received encrypted services are received in a first encryption format; and
said re-encrypted requested service is encrypted in a second encryption format compatible with said consumer device (100).

15. A method in accordance with claim 10, further comprising:
establishing of a secure socket layer (SSL) connection by said consumer device (100) with said decryption device.

16. A method in accordance with claim 10, wherein said decryption device (110) comprises:
a first secure socket layer (SSL) processor (210) for enabling SSL communications and re-encrypting said requested service;
a service selector (240) for acquiring the requested service from said one or more service providers in response to said service request as an encrypted requested service; and
a decryption processor (215) for decrypting said encrypted services received from said
one or more service providers.

17. A method in accordance with claim 10, wherein:
said decryption device (110) is located within a local network; and
multiple consumer devices within said network are enabled to securely communicate with said decryption device.

18. A method in accordance with claim 10, wherein:
said re-encrypted requested service is decrypted and decoded at said decryption device (110); and
said requested service is output from said decryption device (110).

19. A decryption device (110) comprising:
a service selector (240) enabled to acquire an encrypted requested service from one or more
service providers (150) in response to a service request received from a consumer device (100);
a decryption processor (215) enabled to decrypt the encrypted requested service; and
a secure socket layer (SSL) processor (210) enabled for (i) providing SSL communications with the consumer device (100); and (ii) re-encrypting the requested service for secure communication to the consumer device (100).

## Patentansprüche

1. Vorrichtung zur Integration von Ein- und Zwei-Wege-Sicherheitssystemen für eine sichere Verteilung von Diensten, umfassend:
eine Entschlüsselungsvorrichtung (110), die in der Lage ist, verschlüsselte Dienste von einem oder mehreren Dienstanbietern (150) sicher zu empfangen und zu entschlüsseln;
eine Verbrauchervorrichtung (100), die in der Lage ist, sicher mit der Entschlüsselungsvorrichtung (110) zu kommunizieren;
eine der Verbrauchervorrichtung (100) zugeordnete Benutzerschnittstelle (130) zum Einleiten einer Dienstanforderung für einen angeforderten Dienst von dem einen oder den mehreren Dienstanbietern (150); wobei:
die Verbrauchervorrichtung (100) eingerichtet ist, um die Dienstanforderung an die Entschlüsselungsvorrichtung (110) zu übermitteln;
die Entschlüsselungsvorrichtung (110) eingerichtet ist, als Reaktion auf die Dienstanforderung den angeforderten Dienst von dem einen oder den mehreren Dienstanbietern (150) als einen verschlüsselten angeforderten Dienst zu erfassen;
die Entschlüsselungsvorrichtung (110) eingerichtet ist, um den erfassten verschlüsselten angeforderten Dienst zu entschlüsseln;
die Entschlüsselungsvorrichtung (110) eingerichtet ist, um den angeforderten Dienst erneut zu verschlüsseln und den erneut verschlüsselten angeforderten Dienst von der Entschlüsselungsvorrichtung (110) sicher an die Verbrauchervorrichtung (100) zu übertragen; und
die Verbrauchervorrichtung (100) eingerichtet ist, um den wiederverschlüsselten angeforderten Dienst zu entschlüsseln und zu decodieren, um den angeforderten Dienst bereitzustellen.

2. Vorrichtung nach Anspruch 1, bei der die Dienstanforderung über einen sicheren Kanal oder einen nicht sicheren Kanal übertragen wird.

3. Vorrichtung nach Anspruch 1, bei der der angeforderte Dienst sicher durch die Entschlüsselungsvorrichtung (110) erfasst wird.

4. Vorrichtung nach Anspruch 1, bei der:
der angeforderte Dienst durch die Entschlüsselungsvorrichtung (110) in einem verschlüsselten Multiplex von Diensten empfangen wird; und
die Entschlüsselungsvorrichtung (110) den Multiplex entschlüsselt, um den angeforderten Dienst zu erwerben.

5. Vorrichtung nach Anspruch 1, bei der:
die empfangenen verschlüsselten Dienste in einem ersten Verschlüsselungsformat empfangen werden; und
der wiederverschlüsselte angeforderte Dienst in einem zweiten Verschlüsselungsformat verschlüsselt ist, das mit der Verbrauchervorrichtung (100) kompatibel ist.

6. Vorrichtung nach Anspruch 1, bei der die Verbrauchervorrichtung (100) eine Secure Socket Layer (SSL)-Verbindung mit der Entschlüsselungsvorrichtung (110) herstellt.

7. Vorrichtung nach Anspruch 1, bei der die Entschlüsselungsvorrichtung (110) umfasst:
einen ersten Secure Socket Layer (SSL)-Prozessor (210) zum Aktivieren der SSL-Kommunikation und zum Wiederverschlüsseln des angeforderten Dienstes;
einen Dienstselektor (240) zum Erfassen des angeforderten Dienstes von dem einen oder den mehreren Dienstanbietern (150) als Reaktion auf die Dienstanforderung als verschlüsselter angeforderter Dienst; und
einen Entschlüsselungsprozessor (215) zum Entschlüsseln der von dem einen oder den mehreren Dienstanbietern (150) empfangenen verschlüsselten Dienste.

8. Vorrichtung nach Anspruch 1, bei der:
die Entschlüsselungsvorrichtung (110) sich in einem lokalen Netzwerk befindet; und
mehrere Verbrauchervorrichtungen innerhalb des Netzwerks in der Lage sind, sicher mit der Entschlüsselungsvorrichtung (110) zu kommunizieren.

9. Vorrichtung nach Anspruch 1, bei der:
die Entschlüsselungsvorrichtung (110) eingerichtet ist, um den wiederverschlüsselten angeforderten Dienst zu entschlüsseln und zu decodieren, und der angeforderte Dienst von der Entschlüsselungsvorrichtung (110) ausgegeben wird.

10. Verfahren zur Integration von Ein- und Zwei-Wege-Sicherheitssystemen, um eine sichere Verteilung von Diensten zu ermöglichen, umfassend:
Einleiten einer Dienstanforderung für einen angeforderten Dienst auf einer Verbrauchervorrichtung (100) über eine Benutzeroberfläche;
Übermitteln der Dienstanforderung von der Verbrauchervorrichtung an eine Entschlüsselungsvorrichtung (110) ;
Ermöglichen der Erfassung des angeforderten Diensts durch die Entschlüsselungsvorrichtung (110) als verschlüsselter angeforderter Dienst als Reaktion auf die Dienstanforderung;
Entschlüsseln des erfassten verschlüsselten angeforderten Dienstes an der Entschlüsselungsvorrichtung (110);
Wiederverschlüsseln des angeforderten Dienstes an der Entschlüsselungsvorrichtung (110);
sicheres Übermitteln des angeforderten Dienstes von der Entschlüsselungsvorrichtung (110) an die Verbrauchervorrichtung (100); und
Entschlüsseln und Decodieren des wiederverschlüsselten angeforderten Dienstes an der Verbrauchervorrichtung (100), um den angeforderten Dienst bereitzustellen.

11. Verfahren nach Anspruch 10, bei dem die Dienstanforderung über einen sicheren Kanal oder einen nicht sicheren Kanal übertragen wird.

12. Verfahren nach Anspruch 10, bei dem der angeforderte Dienst durch die Entschlüsselungsvorrichtung (110) sicher erfasst wird.

13. Verfahren nach Anspruch 10, bei dem:
der angeforderte Dienst durch die Entschlüsselungsvorrichtung (110) in einem verschlüsselten Multiplex von Diensten empfangen wird; und
die Entschlüsselungsvorrichtung (110) das Multiplex entschlüsselt, um den angeforderten Dienst zu erfassen.

14. Verfahren nach Anspruch 10, bei dem:
die empfangenen verschlüsselten Dienste in einem ersten Verschlüsselungsformat empfangen werden; und
der wiederverschlüsselte angeforderte Dienst in einem zweiten Verschlüsselungsformat verschlüsselt wird, das mit der Verbrauchervorrichtung (100) kompatibel ist.

15. Verfahren nach Anspruch 10, ferner umfassend:
Herstellen einer Secure Socket Layer (SSL)-Verbindung mit der Entschlüsselungsvorrichtung durch die Verbrauchervorrichtung (100).

16. Verfahren nach Anspruch 10, wobei die Entschlüsselungsvorrichtung (110) umfasst:
einen ersten Secure Socket Layer (SSL)-Prozessor (210) zum Aktivieren der SSL-Kommunikation und zum Wiederverschlüsseln des angeforderten Dienstes;
einen Dienstselektor (240) zum Erfassen des angeforderten Dienstes von dem einen oder den mehreren Dienstanbietern (150) als Reaktion auf die Dienstanforderung als verschlüsselter angeforderter Dienst; und
einen Entschlüsselungsprozessor (215) zum Entschlüsseln der von dem einen oder den mehreren Dienstanbietern (150) empfangenen verschlüsselten Dienste.

17. Verfahren nach Anspruch 10, bei dem:
die Entschlüsselungsvorrichtung (110) sich in einem lokalen Netzwerk befindet; und
mehrere Verbrauchervorrichtungen innerhalb des Netzwerks in der Lage sind, sicher mit der Entschlüsselungsvorrichtung zu kommunizieren.

18. Verfahren nach Anspruch 10, bei dem:
der wiederverschlüsselte angeforderte Dienst auf der Entschlüsselungsvorrichtung (110) entschlüsselt und decodiert wird; und
der angeforderte Dienst von der Entschlüsselungsvorrichtung (110) ausgegeben wird.

19. Entschlüsselungsvorrichtung (110), umfassend:
einen Dienstselektor (240), der in der Lage ist, einen verschlüsselten angeforderten Dienst von einem oder mehreren Dienstanbietern (150) als Reaktion auf eine von einer Verbrauchervorrichtung (100) empfangene Dienstanforderung zu erwerben;
einen Entschlüsselungsprozessor (215), der in der Lage ist, den verschlüsselten angeforderten Dienst zu entschlüsseln; und
einen SSL-Prozessor (210), der in der Lage ist, (i) SSL-Kommunikation mit der Verbrauchervorrichtung (100) bereitzustellen; und (ii) den angeforderten Dienst zur sicheren Kommunikation mit der Verbrauchervorrichtung (100) wieder zu verschlüsseln.

## Revendications

1. Appareil pour intégrer des systèmes de sécurité unidirectionnel et bidirectionnel pour permettre une distribution sécurisée de services, comprenant :
un dispositif de décryptage (110) activé pour recevoir et décrypter en toute sécurité des services cryptés à partir d'un ou de plusieurs fournisseur(s) de services (150) ;
un dispositif consommateur (100) activé pour communiquer en toute sécurité avec ledit dispositif de décryptage (110) ;
une interface utilisateur (130) associée audit dispositif consommateur (100) pour lancer une demande de service pour un service demandé auprès dudit ou desdits plusieurs fournisseur(s) de services (150) ;
dans lequel :
ledit dispositif consommateur (100) est agencé pour communiquer ladite demande de service audit dispositif de décryptage (110) ;
ledit dispositif de décryptage (110) est agencé pour acquérir ledit service demandé auprès dudit ou desdits plusieurs fournisseur(s) de services (150) en réponse à ladite demande de service en tant que service demandé crypté ;
ledit dispositif de décryptage (110) est agencé pour décrypter le service demandé crypté acquis ;
ledit dispositif de décryptage (110) est agencé pour recrypter ledit service demandé et pour communiquer en toute sécurité le service demandé recrypté depuis ledit dispositif de décryptage (110) vers ledit dispositif consommateur (100) ; et
le dispositif consommateur (100) est agencé pour décrypter et décoder ledit service demandé recrypté pour fournir ledit service demandé.

2. Appareil selon la revendication 1, dans lequel ladite demande de service est communiquée via l'un parmi un canal sécurisé et un canal non sécurisé.

3. Appareil selon la revendication 1, dans lequel ledit service demandé est acquis en toute sécurité par ledit dispositif de décryptage (110).

4. Appareil selon la revendication 1, dans lequel :
ledit service demandé est reçu par ledit dispositif de décryptage (110) dans un multiplex crypté de services ; et
ledit dispositif de décryptage (110) décrypte ledit multiplex afin d'acquérir ledit service demandé.

5. Appareil selon la revendication 1, dans lequel :
lesdits services cryptés reçus sont reçus dans un premier format de cryptage ; et
ledit service demandé recrypté est crypté dans un deuxième format de cryptage compatible avec ledit dispositif consommateur (100).

6. Appareil selon la revendication 1, dans lequel ledit dispositif consommateur (100) établit une connexion par protocole de sécurité (SSL) avec ledit dispositif de décryptage (110).

7. Appareil selon la revendication 1, dans lequel ledit dispositif de décryptage (110) comprend :
un premier processeur (210) de protocole de sécurité (SSL) pour permettre des communications SSL et recrypter ledit service demandé ;
un sélecteur de service (240) pour acquérir le service demandé auprès dudit ou desdits plusieurs fournisseur(s) de services (150) en réponse à ladite demande de service en tant que service demandé crypté ; et
un processeur de décryptage (215) pour décrypter lesdits services cryptés reçus à partir dudit ou desdits plusieurs fournisseur(s) de services (150).

8. Appareil selon la revendication 1, dans lequel :
ledit dispositif de décryptage (110) est situé dans un réseau local ; et
de multiples dispositifs consommateurs dans ledit réseau sont activés pour communiquer en toute sécurité avec ledit dispositif de décryptage (110).

9. Appareil selon la revendication 1, dans lequel :
ledit dispositif de décryptage (110) est agencé pour décrypter et décoder ledit service demandé recrypté et ledit service demandé est délivré en sortie à partir dudit dispositif de décryptage (110).

10. Procédé pour intégrer des systèmes de sécurité unidirectionnel et bidirectionnel pour permettre une distribution sécurisée de services, comprenant le fait :
de lancer une demande de service pour un service demandé sur un dispositif consommateur (100) via une interface utilisateur ;
de communiquer ladite demande de service depuis ledit dispositif consommateur vers un dispositif de décryptage (110) ;
de permettre l'acquisition dudit service demandé par ledit dispositif de décryptage (110) en tant que service demandé crypté en réponse à ladite demande de service ;
de décrypter le service demandé crypté acquis au niveau dudit dispositif de décryptage (110) ;
de recrypter ledit service demandé au niveau dudit dispositif de décryptage (110) ;
de communiquer en toute sécurité ledit service demandé depuis ledit dispositif de décryptage (110) vers ledit dispositif consommateur (100) ; et
de décrypter et de décoder ledit service demandé recrypté au niveau dudit dispositif consommateur (100) pour fournir ledit service demandé.

11. Procédé selon la revendication 10, dans lequel ladite demande de service est communiquée via l'un parmi un canal sécurisé et un canal non sécurisé.

12. Procédé selon la revendication 10, dans lequel ledit service demandé est acquis en toute sécurité par ledit dispositif de décryptage (110).

13. Procédé selon la revendication 10, dans lequel :
ledit service demandé est reçu par ledit dispositif de décryptage (110) dans un multiplex crypté de services ; et
ledit dispositif de décryptage (110) décrypte ledit multiplex afin d'acquérir ledit service demandé.

14. Procédé selon la revendication 10, dans lequel :
lesdits services cryptés reçus sont reçus dans un premier format de cryptage ; et
ledit service demandé recrypté est crypté dans un deuxième format de cryptage compatible avec ledit dispositif consommateur (100).

15. Procédé selon la revendication 10, comprenant en outre le fait :
d'établir une connexion par protocole de sécurité (SSL) par ledit dispositif consommateur (100) avec ledit dispositif de décryptage.

16. Procédé selon la revendication 10, dans lequel ledit dispositif de décryptage (110) comprend :
un premier processeur (210) de protocole de sécurité (SSL) pour permettre des communications SSL et recrypter ledit service demandé ;
un sélecteur de service (240) pour acquérir le service demandé auprès dudit ou desdits plusieurs fournisseur(s) de services en réponse à ladite demande de service en tant que service demandé crypté ; et
un processeur de décryptage (215) pour décrypter lesdits services cryptés reçus à partir dudit ou desdits plusieurs fournisseur(s) de services.

17. Procédé selon la revendication 10, dans lequel :
ledit dispositif de décryptage (110) est situé dans un réseau local ; et
de multiples dispositifs consommateurs dans ledit réseau sont activés pour communiquer en toute sécurité avec ledit dispositif de décryptage.

18. Procédé selon la revendication 10, dans lequel :
ledit service demandé recrypté est décrypté et décodé au niveau dudit dispositif de décryptage (110) ; et
ledit service demandé est délivré en sortie à partir dudit dispositif de décryptage (110).

19. Dispositif de décryptage (110) comprenant :
un sélecteur de service (240) activé pour acquérir un service demandé crypté auprès d'un ou de plusieurs fournisseur(s) de services (150) en réponse à une demande de service reçue à partir d'un dispositif consommateur (100) ;
un processeur de décryptage (215) activé pour décrypter le service demandé crypté ; et
un processeur (210) de protocole de sécurité (SSL) activé pour (i) fournir des communications SSL avec le dispositif consommateur (100) ; et (ii) recrypter le service demandé pour une communication sécurisée avec le dispositif consommateur (100).
